**Europäisches Patentamt**

**European Patent Office**

**Office européen des brevets**

(19)

(11) Veröffentlichungsnummer : **0 349 603 B1**

# (12) EUROPÄISCHE PATENTSCHRIFT

(45) Veröffentlichungstag der Patentschrift :
**15.01.92 Patentblatt 92/03**

(51) Int. Cl.$^5$ : **H04B 7/005, H04L 25/03**

(21) Anmeldenummer : **88909325.8**

(22) Anmeldetag : **04.11.88**

(86) Internationale Anmeldenummer :
**PCT/EP88/01002**

(87) Internationale Veröffentlichungsnummer :
**WO 89/06073 29.06.89 Gazette 89/14**

(54) **VERFAHREN ZUR ENTZERRUNG VON DISPERSIVEN, LINEAREN ODER NÄHERUNGSWEISE LINEAREN KANÄLEN ZUR ÜBERTRAGUNG VON DIGITALEN SIGNALEN SOWIE ANORDNUNG ZUM AUSFÜHREN DES VERFAHRENS.**

Verbunden mit 88118349.5/0322542
(europäische
Anmeldenummer/Veröffentlichungsnummer)
durch Entscheidung vom 23.05.90.

(30) Priorität : **24.12.87 DE 3744075**

(43) Veröffentlichungstag der Anmeldung :
**10.01.90 Patentblatt 90/02**

(45) Bekanntmachung des Hinweises auf die
Patenterteilung :
**15.01.92 Patentblatt 92/03**

(84) Benannte Vertragsstaaten :
**AT BE CH DE ES FR GB GR IT LI LU NL SE**

(56) Entgegenhaltungen :
**DE-A- 3 246 525**

(56) Entgegenhaltungen :
**US-A- 3 775 685**
**US-A- 4 669 091**
**IEE Proceedings, Sektion A - I, Band 133, Nr. 3, Teil F, (Stevenage, Herts., BG), R. Kohno et al.: "Combination of cancelling intersymbol interference and decoding of error-correcting code", Seiten 224-231**

(73) Patentinhaber : **Licentia
Patent-Verwaltungs-GmbH
Theodor-Stern-Kai 1
W-6000 Frankfurt/Main 70 (DE)**

(72) Erfinder : **LANGEWELLPOTT, Ulrich
verstorben
(DE)**

(74) Vertreter : **Amersbach, Werner, Dipl.-Ing.
Licentia Patent-Verwaltungs-GmbH
Theodor-Stern-Kai 1
W-6000 Frankfurt 70 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 349 603 B1

**Beschreibung**

Die Erfindung betrifft ein Verfahren zur Entzerrung von dispersiven, linearen oder näherungsweise linearen Kanälen zur Übertragung von digitalen Signalen gemäß dem Oberbegriff des Patentanspruchs 1 sowie eine Anordnung zum Ausführen des Verfahrens.

Verfahren bzw. Anordnungen dieser Art werden allgemein in Systemen zur Informationsübertragung über dispersive, zeitvariante Kanäle, insbesondere Funkkanäle, eingesetzt. wie z.B. in digitalen Rundfunksystemen (DAB) oder in zellularen Mobilfunksystemen mit dispersiver Mehrwegeausbreitung. Ihr Zweck besteht in der empfängerseitigen Entzerrung zur Unterdrückung von Nachbarzeichenstörungen, bei den oben genannten zellularen Mobilfunksystemen unter Ausnutzung der Mehrwege-Diversity.

Bekannte Verfahren dieser Art, wie z.B. die in den Artikeln von P. Monsen "Feedback Equalization for Fading Dispersive Channels", IEEE Transactions on Information Theory, Januar 1971, S. 56 - 64, und D. Godard "Channel Equalization Using a Kalman Filter for Fast Data Transmission", IBM Journal Res. Develop., Mai 1974, S. 267 - 273, beschriebenen Verfahren setzen entscheidungs-rückgekoppelte Entzerrer (DFE) ein, denen ein an den Sender angepaßtes Matched-Filter (MF) vorgeschaltet ist.

Der Nachteil dieser Verfahren besteht vor allem darin, daß die Adaption des Empfängers für viele Anwendungen zu langsam erfolgt oder nur mit großem Aufwand zu realisieren ist.

Andere Verfahren, wie z.B. das in den Artikeln von J.G. Proakis und J.H. Miller "An Adaptive Receiver for Digital Signaling Through Channels With Intersymbol Interference", IEEE Transactions on Information Theory, Vol. IT-15, No. 4. Juli 1969, S. 484-497, beschriebene Verfahren setzen lineare Entzerrer ein. Der Nachteil dieser Verfahren besteht vor allem in ihrer mangelhaften Wirksamkeit insbesondere bei der Übertragung über rasch veränderliche Kanäle mit hoher Dispersion.

Bekannt ist auch das Viterbi-Verfahren (G.D. Forney jr. "The Viterbi Algorithm", Proceedings of the IEEE, Vol. 61, No. 4, März 1973, S. 268 - 278), das zwar nicht wie die oben genannten Verfahren auf lineare oder näherungsweise lineare Kanäle beschränkt ist, bei dem jedoch mit anwachsender Dispersionsdauer der Signalverarbeitungsaufwand exponentiell anwächst, wodurch die Wirtschaftlichkeit dieses Verfahrens im allgemeinen stark eingeschränkt ist.

Aus der DE-A 32 46 525 ist eine Einrichtung zur Entzerrung linearer Kanäle bekannt, bei welcher mittels eines an den Übertragungskanal anpaßbaren Matched-Filters ein Empfangssignal in eine zeitdiskrete Signalfolge umgesetzt wird, die in einem nachfolgenden Entzerrer entzerrt wird. Die Einstellungen des Matched-Filters und des Entzerrers werden fortlaufend an die zeitvarianten Eigenschaften des Übertragungskanals angepaßt.

In der US-A 37 75 685 ist eine Entzerrereinrichtung, bei welcher ein Korrelator die Einstellung eines Transversalfilters steuert, detailliert beschrieben.

Die Aufgabe der Erfindung besteht darin, ein Verfahren der eingangs genannten Art zu schaffen, das mit möglichst geringem Signalverarbeitungsaufwand auch bei langer Dispersion eine möglichst hohe Wirksamkeit und schnelle Adaption des Empfängers an den Übertragungskanal ermöglicht.

Die erfindungsgemäße Lösung der Aufgabe ist im Patentanspruch 1 beschrieben. Die übrigen Ansprüche enthalten vorteilhafte Aus- und Weiterbildungen des erfindungsgemäßen Verfahrens sowie Details von vorteilhaften Ausführungsformen einer Anordnung zum Ausführen des erfindungsgemäßen Verfahrens und bevorzugte Anwendungen der Erfindung.

Das erfindungsgemäße Verfahren zur Entzerrung von dispersiven, linearen oder näherungsweise linearen Kanälen zur Übertragung von digitalen Signalen mittels eines Matched-Filters und eines nachgeschalteten Entzerrers sieht vor, daß das Matched-Filter an den gesamten Übertragungskanal angepaßt wird und anschließend die übertragenen Empfangssignale r(t), die durch eine Datenfolge $a_k$ in Form einer Folge von Symbolen $a_i$ aus dem Alphabet des Senders charakterisiert sind, in dem Matched-Filter gefiltert werden. Als Ergebnis dieser Filterung wird am Ausgang des Matched-Filters eine zeitdiskrete Signalfolge $mfo_k$ ("Matched-Filter-Output") ausgegeben, wobei das Matched-Filter die optimalen Abtastzeitpunkte für die zeitdiskrete Signalfolge $mfo_k$ selbsttätig bestimmten kann. Anschließend wird diese Signalfolge $mfo_k$ komplett oder vorzugsweise abschnittsweise im nachgeschalteten Entzerrer mittels eines Iterationsverfahrens mit Relaxation entzerrt und kann anschließend zur weiteren Signalverarbeitung einem oder mehreren Entscheidungsgliedern für harte und/oder weiche Entscheidungen zugeführt werden, wobei den Entscheidungsgliedern mit weicher Entscheidung vorteilhaft jeweils eine fehlerkorrigierende Decodierungsschaltung nachgeschaltet sein kann.

Die Vorteile des Verfahrens bestehen vor allem darin, daß mit vergleichsweise geringem Signalverarbeitungsaufwand selbst bei langer Dispersion eine hohe Wirksamkeit und schnelle Adaption des Empfängers an den Übertragungskanal erreicht wird.

Das erfindungsgemäße Verfahren eignet sich allgemein für den Einsatz in Systemen zur Informationsübertragung über dispersive, zeitvariante Kanäle, insbesondere Funkkanäle. Neben dem Einsatz in digitalen

EP 0 349 603 B1

Rundfunksystemen kann das erfindungsgemäße Verfahren vor allem in zellularen Mobilfunksystemen mit dispersiver Mehrwegeausbreitung, wie z. B. dem zukünftigen paneuropäischen Mobilfunksystem, vorteilhaft eingesetzt werden.

Eine vorteilhafte Ausführungsform eines Anordnung zum Ausführen des Verfahrens besteht aus einem adaptiven Matched-Filter, wie es beispielsweise aus der DE 34 03 715A1 bekannt ist, und einem nachgeschalteten (und weiter unten näher beschriebenen) erfindungsgemäßen Entzerrer.

Wegen seiner hohen Wirksamkeit und schnellen Adaption kann das erfindungsgemäße Entzerrersystem (Verfahren und Anordnung zum Ausführen des Verfahrens) insbesondere die beim zukünftigen paneuropäischen Mobilfunksystem zu erwartenden Mindestdispersionsdauern von 16 µs infolge der Mehrwegeausbreitung ohne Schwierigkeiten verarbeiten.

Seine Vorzüge kommen insbesondere bei Übertragung mit TDMA (Time Division Multiple Access) über rasch veränderliche Kanäle mit hoher Dispersion zum Tragen. Hier zählen die Merkmale schnelle Adaption und - insbesondere im Vergleich mit dem Viterbi-Verfahren - niedriger Rechenaufwand, während die Wirksamkeit letzterem in etwa gleichkommt. Wie alle Entzerrersysteme ist das neuartige Entzerrersystem streng nur auf lineare Übertragungsverfahren anwendbar. Die im paneuropäischen Mobilfunksystem eingesetzte Modulation GMSK ("Gaussian-Minimum-Shift-Keying") kann jedoch ohne spürbare Degradation als linear betrachtet werden. so daß dem Einsatz des Entzerrersystems auch dort nichts im Wege steht. Das neue Konzept ist außerdem ohne weiteres auch für mehrstufige lineare Modulation N-PSK ("N-Phase-Shift-Keying"). N-QAM ("N-Quadratur-Amplitude-Modulation") geeignet. Eine Erweiterung der Anwendung auf kontinuierliche Übertragung ist ebenfalls möglich.

Die Wirkungsweise des Entzerrersystems soll im folgenden in drei Stufen beschrieben werden, wobei die letzte Stufe gleichzeitig die größte Wirksamkeit wie auch das beste Potential für eine einfache Implementierung bietet. Der Ansatz geht von folgender Beziehung aus:

$$D = \int |r(t) - x(t)|^2 \, dt \longrightarrow \min \quad \begin{cases} \hat{=} \text{ MLSE bei Gauss-} \\ \quad \text{verteilung} \\ \\ \hat{=} \text{ MMSE allgemein} \end{cases} \qquad (1)$$

Diese Beziehung entspricht, wie angedeutet, bei Gaussverteilter Störung dem Prinzip der Maximum-Likelihood-Sequence-Estimation (MLSE) und minimiert allgemein bei optimaler Auswahl der Referenz x(t) den mittleren quadratischen Fehler (Minimum-Mean-Squared-Error, MMSE).

Für lineare, zeitinvariante Kanäle gilt:

$$r(t) = \Sigma a_i \, p(t - iT) + n(t) \qquad (2)$$

mit

$a_i$:     Symbole aus dem Alphabet des Senders

$p$ :     Kanalimpulsantwort (einschl. Filterung)

$T$ :     Symboldauer

$n$ :     Störung

Entsprechend läßt sich die Referenz folgendermaßen beschreiben:

$$x(t) = \Sigma b_i \, \hat{p}(t - iT) \qquad (3)$$

mit

$b_i$:     gesuchte Symbole; $b_i = a_i$ im fehlerfreien Fall

$\hat{p}$:     Schätzung von p

1. Stufe

Anstelle der diskreten, ggf. komplexen Symbole $b_i$ treten kontinuierliche Größen $\beta_i$.

$$\beta_i = b_i + \delta b_i \qquad (4)$$
$$x_\beta = \Sigma \beta_i \, \hat{p}(t - iT) \qquad (5)$$
$$D_\beta = \int |r(t) - x_\beta(t)|^2 \, dt \qquad (6)$$

Aur Minimierung von $D_\beta$ wird der Ausdruck bezüglich der $\beta_k$ differenziert und zu null gesetzt. Hieraus folgt:

$$\Sigma \beta_i \int \hat{p}(t - iT) \, \hat{p}^*(t - kT) \, dt = \int r(t) \, \hat{p}^*(t - kT) \, dt \qquad (7)$$

oder

$$\Sigma \beta_i \, R\hat{p}(k - i) = mfo_k \qquad (8)$$

mit

$p^*$ :        p konjugiert komplex

3

$\hat{Rp}(m)$ :       Autokorrelationsfunktion der Kanalimpulsantwort zum Zeitpunkt $m \cdot T$

$mfo_k$ :       Ergebnis der Matched-Filterung (matched filter output)

Diese Beziehung stellt ein lineares Gleichungssystem zur Ermittlung der $\beta_i$ dar. Seine Bedeutung wird durch Anwendung der z-Transformation deutlich:

$$B(z) = \sum_i \beta_i z^{-i} \quad (9)$$
$$\phi(z) = \sum \hat{Rp}(1) z^{-1} \quad (10)$$
$$MFO(z) = \sum mfo_k z^{-k} \quad (11)$$

$$B(z) \cdot \dot{\phi}(z) = MFO(z) \quad (12)$$

oder

$$B(z) = MFO(z) \cdot \phi^{-1}(z)$$

Dies erinnert an den bekannten "zero-forcing"-Entzerrer, hier mit dem Eingangssignal $MFo(z)$ und der Übertragungsfunktion $\phi^{-1}(z)$. Der Unterschied zur bekannten Darstellung besteht zum einen in der Anwendung des auf den momentanen Kanal (und nicht nur auf die Filterung in Sender und Empfänger) angepaßten Matched-Filters, dessen Koeffizienten durch aktuelle Messung der Kanalimpulsantwort zu bestimmen sind; darüber hinaus wird zum anderen die Inverse $\phi^{-1}(z)$ nur indirekt durch Auflösung des linearen Gleichungssystems bestimmt.

Hierzu eignet sich ein Iterationsverfahren mit Relaxation. Bei sehr langer Symbolfolge und zeitlich langsam veränderlicher Kanalimpulsantwort bietet sich eine Aufspaltung in kürzere, einander überlappende Abschnitte an, wobei jedem neuen Abschnitt die jeweils aktuelle Kanalimpulsantwort zugrunde liegt. Zweckmäßigerweise wählt man folgende Umformulierung:

$$\sum_j \rho_j \, \beta_{k+j} = mfo'_k \quad (13)$$

$$\rho_j = \hat{Rp^*}(j)/\hat{Rp}(0)$$

$$mfo'_k = mfo_k/\hat{Rp}(0).$$

$$\ldots$$

Damit lautet gemäß dem hier angewendeten Gauss-Seidel-Iterationsverfahren die Iterationsvorschrift im Iterationsschritt 1, Symbol k:

$$\delta\beta_k^{(1)} = mfo'_k - \sum_{j<0} \rho_j \, \beta_{k+j}^{(1)} - \sum_{j\geq0} \rho_j \, \beta_{k+j}^{(1-1)} \quad (14)$$

$$\beta_k^{(l)} = \beta_k^{(l-1)} + \alpha \, \delta\beta_k^{(l)} \quad (15)$$

mit

$\alpha$ :       Relaxationsfaktor zur Steuerung der Konvergenz;

$\alpha > 1$ :       Überrelaxation

$\alpha < 1$ :       Unterrelaxation

$\alpha = 1$ :       keine Relaxation

Beobachtung der Konvergenz:

$$s^{(l)} = \sum |\delta\beta_k^{(l)}|^2 \quad (16)$$
$$\text{Verringerung von } \alpha, \text{ falls } s^{(l)} > s^{(l-1)} \quad (17)$$

Anfangsbedingungen:

$$\beta_k^{(0)} = mfo_k' \qquad (18)$$

$$s^{(0)} = \Sigma \left| \beta_k^{(0)} \right|^2 \qquad (19)$$

$$s^{(0)} = \Sigma \left| \beta_k^{(0)} \right|^2 \quad (19)$$

Abbruchbedingung:

$$s^{(lm)} \leqq \varepsilon \cdot s^{(0)} \quad (20)$$

Entscheidung, falls nicht soft decision erwünscht ist:

Abbildung von $\beta_k^{(lm)}$ auf nächstgelegenes Element des Alphabets:

$$b_k = \hat{\beta}^{(lm)} \quad (21)$$

Dieses Verfahren erlaubt eine vergleichsweise einfache Implementierung, bei der in jedem Iterationsschritt ein Entzerrungsfilter mit rückgekoppeltem Ausgang läuft, das im Aufbau einem FIR-Filter (Finite-Impulse-Response-Filter) ähnelt.

Ähnlich wie beim "zero-forcing"-Entzerrer kann in dieser Stufe eine Anhebung des Rauschens und schlechte oder keine Konvergenz auftreten, falls $\phi(z)$ nicht invertierbar ist. Eine erste Verbesserung bietet die nachfolgend beschriebene Stufe 2.

## 2. Stufe

Hier wird die Entscheidung bereits während der Iteration vorgenommen:

$$\delta\beta_k^{(1)} = mfo_k' - \sum_{j<0} \rho_j \hat{\beta}_{k+j}^{(1)} - \sum_{j>0} \rho_j \hat{\beta}_{k+j}^{(1-1)} - \beta_k^{(1-1)} \qquad (22)$$

$$\beta_k^{(l)} = \beta_k^{(l-1)} + \alpha \, \delta\beta_k^{(l)} \quad (23)$$

Ansonsten gibt es keine Abweichungen zu Stufe 1.

Ausgegeben werden:

$$\hat{\beta}_k^{(lm)} \text{ bi hard-decision}$$
$$\beta_k^{(lm)} \text{ bei soft-decision}$$

Die Leistungsmerkmale von Stufe 2 ähneln nun denen des nichtlinear rückgekoppelten Entzerrers (DFE, Decision Feed-back Equalizer). Neben guter Konvergenz ergibt sich bei nicht allzu starken Störungen eine wirksame Rauschunterdrückung. Allerdings besteht eine Tendenz, in Fehlermuster einzurasten; es stellen sich u. U. Grenzzyklen ein wie bei amplituden- und zeitdiskreten Regelkreisen. Spürbare Verbesserung bringt Stufe 3.

## 3. Stufe

Eine harte Entscheidung (hard-decision) erfolgt entweder grundsätzlich immer (FIG. 4) oder vorzugsweise während der Iterationen nur dann, wenn ein Wert $\beta_k^{(l)}$ innerhalb eines gewissen Entscheidungsgebiets um die diskreten Alphabet-Elemente liegt. Die in den FIG. 5 und 6 gezeigten Beispiele veranschaulichen Alternativen für ein binäres Alphabet.

Mit Stufe 3 werden sowohl sehr gute Konvergenz als auch gute Entzerrung erzielt. Speziell für das GSM-System ("Groupe-Special-Mobile"-System) können in diesem Zusammenhang folgende Aussagen gemacht werden:

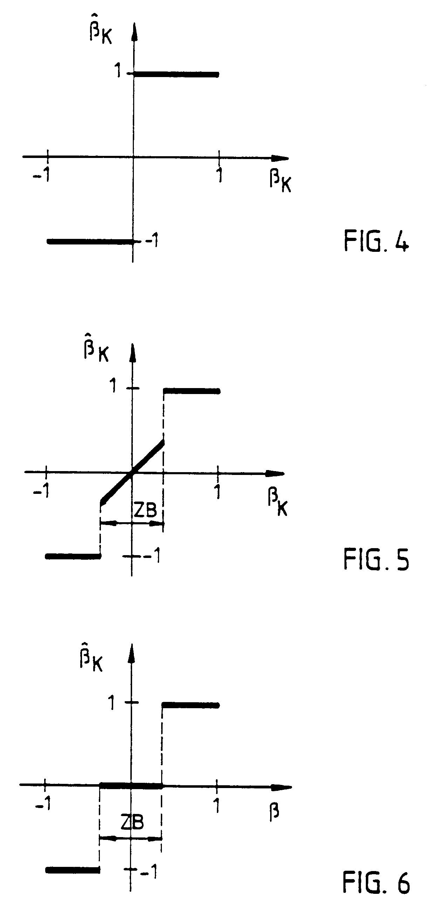

An die Demodulation schließt sich eine vorzugsweise fehlerkorrigierende Faltungsdecodierung an. Diese erfordert für optimale Wirksamkeit soft-decision des Demodulators. In diesem Fall werden i.a. nicht mehr als drei Iterationen benötigt, um eine Qualität zu erzielen, die der des Viterbi-Algorithmus zur Demodulation fast gleichkommt. Durch Verwendung von Alternative 2 (FIG. 6) kann die FIR-Filterung ("Finite-Impulse-Response"-Filterung) auf Addition/Subtraktion reduziert werden. Um die Forderung der Entzerrung von Kanälen bis zu einer Dispersion von 16 μs zu erfüllen, ist mit dem neuen Entzerrerkonzept weniger als ein Viertel des Signalverarbeitungsaufwands eines entsprechenden Viterbi-Demodulators in der Ungerböckschen Formulierung erforderlich.

Im Vergleich zum DFE ist anzumerken, daß der Adaptionsphase des DFE beim neuen Entzerrer die Iterationen zur Lösung des Gleichungssystems gegenüberstehen. Während die DFE im allgemeinen aus komplexwertigen FIR-Filtern besteht, treten komplexe Koeffizienten beim neuen Entzerrer nur in der der eigentlichen Entzerrung vorgeschalteten Matched-Filterung auf. Als wesentlichen Vorteil des neuen Entzerrers gegenüber dem DFE kann jedoch der Fortfall der Empfindlichkeit gegenüber der Wahl des Abtastzeitpunkts genannt werden. Dies wird durch die vorgezogene, auf der aktuellen Kanalvermessung beruhende und an sich bekannte adaptive Matched-Filterung erzielt, die an den gesamten Übertragungskanal angepaßt wird.

Im folgenden wird die Erfindung anhand der Figuren näher erläutert. Es zeigen:

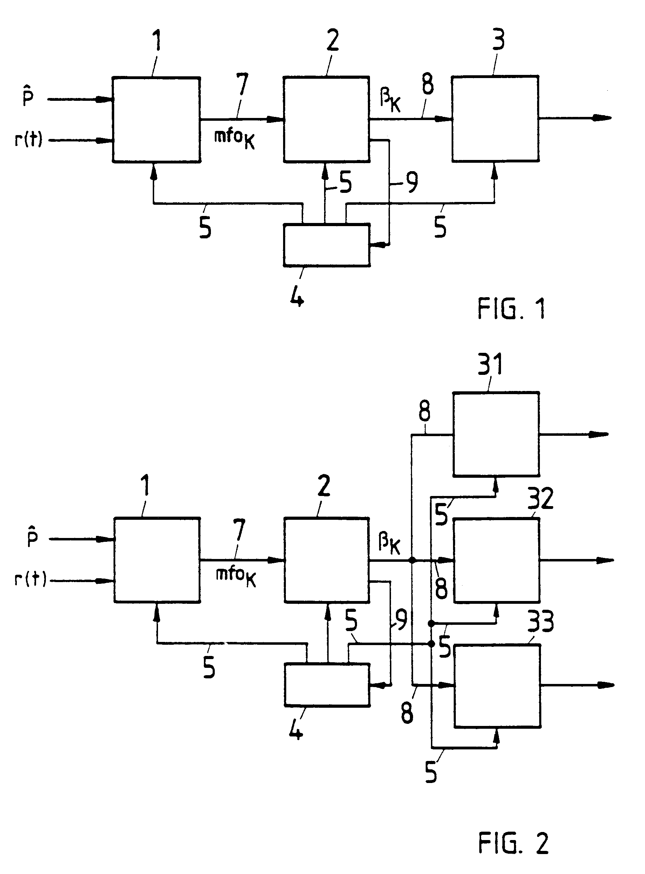

FIG. 1 das Blockschaltbild einer vorteilhaften Ausführungsform einer erfindungsgemäßen Anordnung zum Ausführen des erfindungsgemäßen Verfahrens

FIG. 2 das Blockschaltbild einer weiteren vorteilhaften Ausführungsform einer erfindungsgemäßen Anordnung zum Ausführen des erfindungsgemäßen Verfahrens

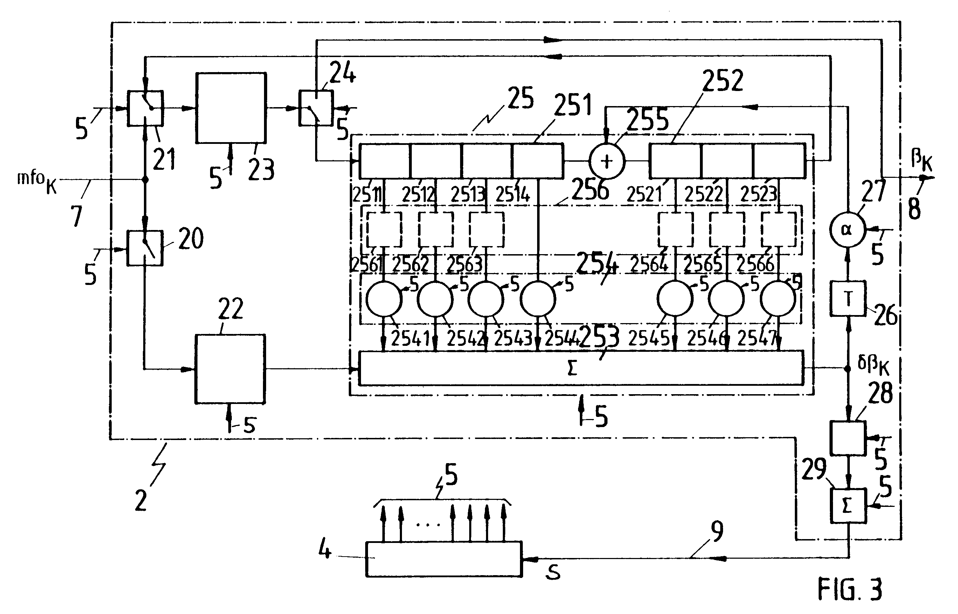

FIG. 3 das Blockschaltbild einer vorteilhaften Ausführungsform des Entzerrers der erfindungsgemäßen Anordnung zum Ausführen des erfindungsgemäßen Verfahrens

FIG. 4 eine bildliche Darstellung der Ausgangssignale eines Entscheidungsgliedes für harte Entscheidungen in Abhängigkeit von den Eingangssignalen für ein binäres Alphabet

FIG. 5-6 bildliche Darstellungen der Ausgangssignale verschiedener Entscheidungsglieder für weiche Entscheidungen in Abhängigkeit von den Eingangssignalen für ein binäres Alphabet.

Die erfindungsgemäße Anordnung zum Ausführen des erfindungsgemäßen Verfahrens in FIG. 1 besteht aus einem adaptiven Matched-Filter 1, an dem eingangsseitig zum einen die zu entzerrenden Empfangssignale $r(t)$ und zum anderen die durch eine (nicht gezeigte) andere Schaltung gewonnene Schätzung $\hat{p}$ der Kanalimpulsantwort $p$ anliegen. Das adaptive Matched-Filter 1 ist ausgangsseitig über eine Verbindungsleitung 7 mit dem Eingang eines Entzerrers 2 verbunden und liefert die aus der Filterung gewonnene zeitdiskrete Signalfolge $mfo_k$. Im Entzerrer 2 wird diese Signalfolge komplett oder abschnittsweise mittels eines Iterationsverfahrens mit Relaxation entzerrt. Die durch den Iterationsprozeß gewonnenen Schätzwerte $\beta_k$ werden am Ausgang des Entzerrers 2 ausgegeben und können in einer weiteren, über eine Verbindungsleitung 8 mit dem Ausgang des Entzerrers 2 verbundenen Schaltung 3 weiterverarbeitet werden. Eine Ablaufsteuerung 4 mit Steuerleitungen 5 überwacht den Entzerrungsprozeß. Über eine Leitung 9 erhält dabei die Ablaufsteuerung 4 von dem Entzerrer 2 die Information darüber, wann die einzelnen Iterationsprozesse im Entzerrer 2 abzubrechen sind.

Die Schaltung 3 kann dabei beispielsweise ein Entscheidungsglied 31 für harte Entscheidungen oder ein Entscheidungsglied 32 oder 33 für weiche Entscheidungen oder, wie in FIG. 2 gezeigt, eine Kombination solcher Entscheidungsglieder sein, wobei sich die Entscheidungsglieder 31, 32 und 33 in der Art ihrer Entscheidung unterscheiden, wie beispielhaft in den FIG. 4 (harte Entscheidung: eindeutige Abbildung des Eingangswertes $\beta_k$ auf das nächstgelegene Element $b_k$ des Alphabets für alle $\beta_k$), 5 (weiche Entscheidung I: keine Abbildung des Eingangswertes $\beta_k$ auf das nächstgelegene Element $b_k$ des Alphabets für Eingangswerte $\beta_k$ innerhalb eines Zwischenbereichs ZB, eindeutige Abbildung - harte Entscheidung - in den übrigen Bereichen) und 6 (weiche Entscheidung II: Zuweisung des Mittelwerts zweier benachbarter Elemente $b_k$ des Alphabets für Eingangswerte $\beta_k$ innerhalb eines Zwischenbereichs ZB, eindeutige Abbildung - harte Entscheidung - in den übrigen Bereichen) für ein binäres Alphabet gezeigt ist. Einem Entscheidungsglied 32 oder 33 für weiche Entscheidungen kann vorteilhaft noch eine fehlerkorrigierende Decodierschaltung nachgeschaltet werden.

Die vorteilhafte Ausführungsform des Entzerrers 2 der erfindungsgemäßen Anordnung zum Ausführen des erfindungsgemäßen Verfahrens in FIG. 3 enthält einen ersten Speicher 22 und einen zweiten Speicher 23.

Der erste Speicher 22 ist eingangsseitig über einen Ein-/Ausschalter 20 und die Verbindungsleitung 7 mit dem Ausgang des (nicht gezeigten) adaptiven Matched-Filters verbunden und ausgangsseitig an den Eingang eines Summationsgliedes 253 angeschlossen.

Der zweite Speicher 23 ist eingangsseitig über einen ersten Umschalter 21 entweder über die Verbindungsleitung 7 mit dem Ausgang des (nicht gezeigten) adaptiven Matched-Filters oder mit dem Ausgang eines mit einem ersten Schieberegister 251 und einem Additionsglied 255 in Reihe geschalteten zweiten Schieberegisters 252 verbunden. Ausgangsseitig ist dieser zweite Speicher 23 über einen zweiten Umschalter 24 entweder mit dem Eingang des ersten Schieberegisters 251 oder mit dem Ausgang 8 des Entzerrers 2 verbunden.

Die einzelnen Registerplätze 2511 - 2514 bzw. 2521 - 2524 des ersten bzw. zweiten Registers 251, 252 sind ausgangsseitig entweder direkt (für die 1. Stufe) oder, mit Ausnahme des Registerplatzes 2514 am Ausgang des ersten Schieberegisters 251, über Entscheidungsglieder 2561 - 2566 einer Entscheidungsstufe 256 (für die 2. oder 3. Stufe) mit einzelnen steuerbaren Gewichtungsgliedern 2541 - 2547 einer Gewichtungsstufe 254 verbunden.

Die Gewichtungsglieder 2541 - 2547 wiederum sind ausgangsseitig an die Summationsschaltung 253 angeschlossen. Die Schieberegister 251, 252, das Additionsglied 255, die Gewichtungsstufe 254, das Summationsglied 253 und ggf. die Entscheidungsstufe 256 bilden dabei zusammen ein Entzerrungsfilter 25, das im Aufbau einem FIR-Filter ähnelt.

Der Ausgang des Summationsgliedes 253 ist einerseits über eine Zeitverzögerung 26 und ein nachgeschaltetes steuerbares Gewichtungsglied 27 mit einem einstellbaren Gewichtungsfaktor $\alpha$ mit dem Additionsglied 255 des Entzerrungsfilters 25 verbunden und andererseits über eine erste schaltung zur Betragsquadratbildung 28, eine nachgeschaltete weitere Summationsschaltung 29 über eine Verbindungsleitung 9 mit der Ablaufsteuerung 4, 5 verbunden.

Zu Beginn eines Iterationsprozesses werden die beiden speicher 22 und 23 über die Schalter 20 und 21 mit dem Ausgang des adaptiven Matched-Filters verbunden und ein (mit anderen Abschnitten überlappender) Abschnitt der zeitdiskreten Signalfolge $mfo_k$ (oder die komplette Signalfolge, sofern sie kurz genug ist) in die beiden Speicher 22 und 23 eingelesen. Der Ausgang des zweiten Speichers 23 ist dabei über den zweiten Umschalter 24 mit dem Eingang des ersten Schieberegisters 251 verbunden.

Anschließend wird der Schalter 20 geöffnet, d.h. der Eingang des ersten Speichers 22 vom Ausgang des adaptiven Matched-Filters abgekoppelt, sowie der Eingang des zweiten Speichers 23 über den ersten Umschalter 21 mit dem Ausgang des zweiten Schieberegisters 252 verbunden.

Nacheinander werden nun im Takt der Ablaufsteuerung 4, 5 die in den Speichern 22 und 23 gespeicherten Daten in die Schieberegister 251, 252 und in das Summationsglied überführt. Die in den Schieberegisterplätzen 2511 - 2514; 2521 - 2524 befindlichen Werte werden dabei (bei der 2. oder 3. Stufe nach Durchlauf der Entscheidungsstufe 256) in der Gewichtungsstufe 254 gewichtet und die gewichteten Daten anschließend im Summationsglied 253 aufsummiert. Die aufsummierten Daten $\delta\beta_k$ werden anschließend über die Zeitverzögerung 26 bzw. das Gewichtungsglied 27 zeitverzögert bzw. jeweils mit dem eingestellen Relaxationsfaktor $\alpha$ gewichtet über das Additionsglied 255 dem Eingang des zweiten Schieberegisters 252 zugeführt.

Gleichzeitig werden von den aufsummierten Daten $\delta\beta_k$ in der ersten Schaltung 28 die Betragsquadrate gebildet, die anschließend in der weiteren Summationsschaltung 29 aufsummiert werden. Das Summationssignal s wird über die Verbindungsleitung 9 der Ablaufsteuerung 4, 5 zugeführt und dient zum einen zur Einstellung des Relaxationsfaktors $\alpha$ und zum anderen zur Herleitung eines Kriteriums für den Abbruch des jeweils laufenden Iterationsprozesses.

In einer vorteilhaften Ausführungsform wird dabei der Iterationsprozeß abgebrochen, wenn das Summationssignal s einen bestimmten ersten Wert unterschreitet.

In einer weiteren vorteilhaften Ausführungsform wird der Relaxationsfaktor $\alpha$ für die rückgeführten aufsummierten Daten $\delta\beta_k$ im darauffolgenden Iterationszyklus nicht fest vorgegeben, sondern jeweils so eingestellt, daß er vergrößert (verkleinert) wird, wenn die Differenz der Summensignale s der beiden vorangegangenen Iterationszyklen einen bestimmten zweiten Wert unterschreitet (überschreitet), wobei vorteilhafterweise die Größe des zweiten Wertes in Abhängigkeit von der Größe des jeweiligen letzten Summationssignals s gewählt wird.

Die am Ausgang des zweiten Schieberegisters 252 erscheinenden neuen Schätzwerte $\beta_k$ werden während des Iterationsprozesses fortlaufend in den zweiten Speicher 23 eingelesen und überschreiben dabei die bisher gespeicherten Daten (nach dem ersten Iterationszyklus also die gespeicherten Daten der Signalfolge $mfo_k$ und in den darauffolgenden Iterationsszyklen die in dem jeweils vorangegangenen Iterationszyklus gewonnenen Schätzwerte $\beta_k$).

Am Ende des Iterationsprozesses werden die Speicherinhalte des zweiten Speichers 23, d.h. die zuletzt gespeicherten Schätzwerte $\beta_k$, über den Umschalter 24 an den Ausgang 8 des Entzerrers 2 gegeben und von dort an die nachfolgenden signalverarbeitenden Schaltungen, wie z.B. Entscheidungsglieder und/oder fehlerkorrigierenden Decodierungsschaltungen, weitergeleitet. Anschließend wird die nächste Signalfolge $mfo_k$ bzw. der nächste Abschnitt der Signalfolge $mfo_k$ im Entzerrer 2 verarbeitet, indem die Eingänge der beiden Speicher 22 und 23 über die Schalter 20, 21 wieder mit dem Aufgang des adaptiven Matched-Filters verbunden werden und der Ausgang des zweiten Speichers 23 über den zweiten Umschalter 24 wieder mit dem Eingang des ersten Schieberegisters 251 verbunden wird und der sich dann anschließende Iterationsprozeß wie oben beschrieben wiederholt.

Es versteht sich, daß das erfindungsgemäße Verfahren bzw. die erfindungsgemäße Anordnung zum Ausführen des Verfahrens mit fachmännischem Können aus- bzw. weiter gebildet bzw. an die verschiedenen Anwendungen an,gepaßt werden kann, ohne daß dies hier an dieser Stelle näher erläutert werden muß.

So ist es z.B. möglich, in dem Ausführungsbeispiel des Entzerrers 2 gemäß FIG. 3 anstelle der beiden beispielhaft mit vier bzw. drei Registerplätzen versehenen Schieberegister im Entzerrungsfilter des Entzerrers längere (oder kürzere) Schieberegister zu verwenden (mit einer entsprechend größeren - oder kleineren - Anzahl von Gewichtungsgliedern in der Gewichtungsstufe und - bei der 2. oder 3. Stufe - Entscheidungsgliedern in der Entscheidungsstufe des Entzerrungsfilters).

Auch ist es möglich, anstelle der in dem Ausführungsbeispiel des Entzerrers 2 gemäß FIG. 3 beispielhaft angenommenen reellen Datenfolge $a_k$ komplexwertige Datenfolgen $a_k$ in dem Entzerrer 2 zu verarbeiten, wobei in diesem Fall das adaptive Matched-Filter bzw. im Entzerrer die beiden Speicher sowie die Schieberegister, das Additionsglied und die Gewichtungsglieder im Entzerrungsfilter komplex ausgeführt werden müssen.

EP 0 349 603 B1

Schließlich ist es denkbar, die Schätzung $\hat{p}$ der Kanalimpulsantwort p im adaptiven Matched-Filter selbst durchzuführen, so daß nur noch das Empfangssignal r(t) in das adaptive Matched-Filter eingegeben werden muß.

**Patentansprüche**

1. Verfahren zur Entzerrung von dispersiven, linearen oder näherungsweise linearen Kanälen, insbesondere Funkkanälen, zur Übertragung von digitalen Signalen mittels eines an den gesamten Übertragungskanal anpaßbaren Matched-Filters (1), welches ein durch eine Datenfolge $a_k$ charakterisiertes Empfangssignal r(t) in eine zeitdiskrete Signalfolge $mfo_k$ am Ausgang des Matched-Filters umsetzt, und mittels eines einstellbaren Entzerrers, der die zeitdiskrete Empfangsfolge $mfo_k$ entzerrt, dadurch gekennzeichnet,
- daß die Signalfolge $mfo_k$ in kürzere, einander überlappende Anschnitte unterteilt wird und die Abschnitte einzeln in einem ersten und zweiten Speicher (22, 23) des Entzerrers (2) gespeichert werden;
- daß anschließend die jeweils gespeicherte Signalfolge $mfo_k$ in einem Entzerrungsfilter (25) des Entzerrers (2) entzerrt wird, indem die im zweiten Speicher (23) gespeicherten Daten dem Eingang eines mit einem zweiten Schieberegister (252) in Reihe geschalteten ersten Schieberegisters (251) zugeführt werden, indem in jedem Takt eines Iterationszyklusses die in den einzelnen Registerplätzen (2511 - 2514; 2521 - 2523) der beiden Schieberegister (251; 252) gespeicherten Daten über Gewichtungsglieder (2541 - 2547) einer Gewichtungsstufe (254) einem Summationsglied (253) zugeführt und dort aufsummiert werden und indem die aufsummierten Daten $\delta\beta_k$ am Ausgang des Summationsgliedes (253) anschließend zeitverzögert und zusätzlich gewichtet (relaxiert) zu dem Eingang des zweiten Schieberegisters (252) rückgeführt werden;
- daß im Entzerrungsfilter (25) während eines jeden Iterationszyklusses neue Schätzwerte $\beta_k$ der gesuchten Datenfolge ak erzeugt werden, die jeweils am Ausgang des zweiten Schieberegisters (252) ausgegeben und anschließend in dem zweiten Speicher (23) gespeichert werden und dabei die bisher gespeicherten Daten überschreiben;
- daß in jedem Iterationszyklus von den verarbeiteten Daten $\delta\beta_k$ am Ausgang des Summationsgliedes (253) das Betragsquadrat gebildet wird und die einzelnen Betragsquadrate aufsummiert werden und das Summensignal s den Relaxationsfaktor $\alpha$ für die rückgeführten verarbeiteten Daten $\delta\beta_k$ bestimmt und außerdem als Kriterium für den Abbruch des Iterationsprozesses dient;
- daß nach Abbruch des Iterationsprozesses die in dem zweiten Speicher (23) zuletzt abgelegten Schätzwerte $\beta_k$ der gesuchten Datenfolge $a_k$ am Ausgang (8) des Entzerrers (2) ausgegeben werden und anschließend der mächste Abschnitt der Ausgangssignalfolge $mfo_k$ des Matched-Filters (1) in die beiden Speicher (22, 23) eingespeichert wird.

2. Verfahren nach Anspruch 1, dadurch gekennzeichnet, daß die Gewichtungsfaktoren der einzelnen Gewichtungsglieder (2541 - 2547) der Gewichtungsstufe (254) dem Realteil der Autokorrelationsfunktion der Impulsantwort der Übertragungsfunktion des gesamten Übertragungskanals für den jeweiligen Abschnitt entsprechen.

3. Verfahren nach Anspruch 2, dadurch gekennzeichnet, daß die Länge eines Abschnitts so gewählt wird, daß die Kanalimpulsantwort während des Abschnitts näherungsweise als stationär angesehen werden kann.

4. Verfahren nach einem der Ansprüche 1 bis 3, dadurch gekennzeichnet, daß der Iterationsprozeß abgebrochen wird, wenn das Summensignal s einen bestimmten ersten Wert unterschreitet.

5. Verfahren nach einem der Ansprüche 1 bis 3, dadurch gekennzeichnet, daß der Relaxationsfaktor $\alpha$ für die rückgeführten verarbeiteten Daten $\delta\beta_k$ im nachfolgenden Iterationszyklus vergrößert (verkleinert) wird, wenn die Differenz der Summensignale s der beiden vorangegangenen Iterationszyklen einen bestimmten zweiten Wert unterschreitet (überschreitet).

6. Verfahren nach Anspruch 5, dadurch gekennzeichnet, daß die Größe des bestimmten zweiten Werts von der Größe des jeweiligen letzten Summensignals s abhängt.

7. Verfahren nach einem der Ansprüche 1 bis 6, dadurch gekennzeichnet, daß die nach Abbruch des Iterationsprozesses aus dem zweiten Speicher (23) ausgelesenen Schätzwerte $\beta_k$ der gesuchten Datenfolge ak einem Entscheidungsglied (31) zugeführt werden.

8. Verfahren nach einem der Ansprüche 1 bis 6, dadurch gekennzeichnet, daß die nach Abbruch des Iterationsprozesses aus dem zweiten Speicher (23) ausgelesenen Schätzwerte $\beta_k$ der gesuchten Datenfolge ak einer fehlerkorrigierenden Decodierungsschaltung (32 oder 33) zugeführt werden.

9. Verfahren nach einem der Ansprüche 1 bis 8, dadurch gekennzeichnet, daß die in den einzelnen Registerplätzen (2511 - 2514; 2521 - 2523) der beiden Schieberegister (251, 252) gespeicherten Daten über Entscheidungsglieder einer zusätzlichen Entscheidungsstufe (256) den Gewichtungsgliedern (2541 - 2547) der Gewichtungsstufe (254) zugeführt werden.

10. Verfahren nach Anspruch 8, dadurch gekennzeichnet, daß die in dem letzten Registerplatz (2514) am Ausgang des ersten Schieberegisters (251) gespeicherten Daten direkt dem zugehörigen Gewichtungsglied (2544) zugeführt werden und die in den übrigen registern (2511 - 2513; 2521 - 2523) der beiden Schieberegister (251, 252) gespeicherten Daten über die Entscheidungsglieder (2561 - 2566) der zusätzlichen Entscheidungsstufe (256) den zugehörigen Gewichtungsgliedern (2541 - 2543; 2545 - 2547) der Gewichtungsstufe (254) zugeführt werden.

11. Verfahren nach einem der Ansprüche 9 oder 10, dadurch gekennzeichnet, daß in den Entscheidungsgliedern der Entscheidungsstufe (256) jeweils eine harte Entscheidung getroffen wird.

12. Verfahren nach einem der Ansprüche 9 oder 10, dadurch gekennzeichnet, daß in den Entscheidungsgliedern der Entscheidungsstufe (256) für Daten der Registerplätze der beiden Schieberegister (251, 252), die innerhalb eines vorgegebenen Bereiches liegen, jeweils eine weiche Entscheidung und andernfalls eine harte Entscheidung getroffen wird.

13. Verfahren nach einem der Ansprüche 9 oder 10, dadurch gekennzeichnet, daß in den Entscheidungsgliedern der Entscheidungsstufe (256) für Daten der Registerplätze der beiden Schieberegister (251, 252), die innerhalb eines vorgegebenen Bereiches liegen, der Mittelwert der jeweils benachbarten harten Entscheidungswerte zugewiesen und andernfalls eine harte Entscheidung getroffen wird.

14. Anordnung zur Entzerrung von dispersiven, linearen oder näherungsweise linearen Kanälen, insbesondere Funkkanälen, zur Übertragung von digitalen Signalen mittels eines an den gesamten Übertragungskanal anpaßbaren Matched-Filters (1), welches ein durch eine Datenfolge $a_k$ charakterisiertes Empfangssignal r(t) in eine zeitdiskrete Signalfolge $mfo_k$ am Ausgang des Matched-Filters umsetzt, und mittels eines einstellbaren Entzerrers, der die zeitdiskrete Empfangsfolge $mfo_k$ entzerrt, dadurch gekennzeichnet,

– daß der Entzerrer einen ersten (22) und einen zweiten (23) Speicher und ein Entzerrungsfilter (25) mit einem Summationsglied (253) und einem ersten (251) und einem zweiten (252) Schieberegister enthält;

– daß der erste Speicher (22) des Entzerrers (2) mit seinem Eingang über einen steuerbaren Ein-/Ausschalter (20) mit dem Eingang (7) des Entzerrers (2) verbindbar ist und mit seinem Ausgang mit dem Eingang des Summationsgliedes (253) des Entzerrungsfilters (25) des Entzerrers (2) verbunden ist;

– daß der zweite Speicher (23) des Entzerrers (2) mit seinem Eingang über einen ersten steuerbaren Umschalter (21) entweder mit dem Eingang (7) des Entzerrers (2) oder mit dem Ausgang des zweiten Schieberegisters (252) des Entzerrungsfilters (25) des Entzerrers (2) verbindbar ist und mit seinem Ausgang über einen zweiten steuerbaren Umschalter (24) entweder mit dem Eingang des ersten Schieberegisters (251) des Entzerrungsfilters (25) oder mit dem Ausgang (8) des Entzerrers (2) verbindbar ist;

– daß der Ausgang des Summationsgliedes (253) des Entzerrungsfilters (25) des Entzerrers (2) über ein Zeitglied (26) und ein steuerbares Gewichtungsglied (27) mit einem zwischen die beiden Schieberegister (251, 252) des Entzerrungsfilters (25) geschalteten Additionsglied (255) verbunden ist und über eine erste Schaltung (28) zur Betragsquadratbildung und ein nachgeschaltetes zweites Summationsglied (29) mit einer Ablaufsteuerung (4, 5) verbunden ist.

15. Anordnung nach Anspruch 14, dadurch gekennzeichnet, daß jeder der einzelnen Registerplätze (2511 - 2514; 2521 - 2523) der beiden Schieberegister (251, 252) des Entzerrungsfilters (25) des Entzerrers (2) ausgangsseitig jeweils mit dem Eingang des ihm zugeordneten Gewichtungsgliedes (2541 - 2544; 2545 - 2547) der Gewichtungsstufe (254) des Entzerrungsfilters (25) verbunden sind und die Ausgänge der Gewichtungsglieder (2541 - 2547) mit dem Summationsglied (253) verbunden sind.

16. Anordnung nach Anspruch 15, dadurch gekennzeichnet, daß die Gewichtungsglieder (2541 - 2547) der Gewichtungsstufe (254) des Entzerrungsfilters (25) des Entzerrers (2) steuerbar sind.

17. Anordnung nach einem der Ansprüche 14 bis 16, dadurch gekennzeichnet, daß jeder der Registerplätze (2511 - 2514; 2521 - 2523) der beiden Schieberegister (251, 252) des Entzerrungsfilters (25) des Entzerrers (2) oder jeder der Registerplätze bis auf den am Ausgang des ersten Schieberegisters (251) gelegenen letzten Registerplatz (2514) ausgangsseitig jeweils über ein Entscheidungsglied (2561 - 2563; 2564 - 2566) einer zusätzlichen Entscheidungsstufe (256) mit dem Eingang des ihm zugeordneten Gewichtungsgliedes (2541 - 2543; 2545 - 2547) der Gewichtungsstufe (254) verbunden ist.

18. Anordnung nach einem der Ansprüche 14 bis 17, dadurch gekennzeichnet, daß bei komplexwertigen Datenfolgen $a_k$ das adaptive Matched-Filter (1) sowie die Speicher (22, 23), die Schieberegister (251, 252), das Additionsglied (256) des Entzerrungsfilters (25) des Entzerrers (2) sowie die Gewichtungsglieder (2541 - 2547) der Gewichtungsstufe (254) des Entzerrungsfilters (25) komplex ausgebildet sind.

19. Entzerrungssystem nach einem der Ansprüche 1 bis 18, gekennzeichnet durch die Anwendung für ein zellulares Mobilfunksystem mit dispersiver Mehrwegeausbreitung.

20. Entzerrungssystem nach einem der Ansprüche 1 bis 18, gekennzeichnet durch die Anwendung in einem digitalen Rundfunksystem (DAB).

## Claims

1. Method for the equalising of dispersive, linear or approximately linear channels, in particular radio channels, for the transmission of digital signals by means of a matched filter (1), which is matchable to the entire transmission channel and which translates a received signal r(t) characterised by a data sequence $a_k$ into a time-discrete signal sequences $mfo_k$ at the output of the matched filter, and by means of an adjustable equaliser which equalises the time-discrete signal sequence $mfo_k$, characterised thereby, that
- the signal sequence $mfo_k$ is subdivided into shorter, mutually overlapping portions and the portions are stored individually in a first and second store (22, 23) of the equaliser (2),
- the respectively stored signal sequence $mfo_k$ is subsequently equalised in an equalising filter (25) of the equaliser (2) in that the data stored in the second store (23) are fed to the input of a first shift register (251) connected in series with a second shift register (252) in that the data stored in the individual register places (2511 to 2514; 2521 to 2523) of both the shift registers (251; 252) are fed in each cycle of an iteration cycle by way of weighting members (2541 to 2547) of a weighting stage (254) to a summation member (253) and summed up there and in that the summed data $\delta\beta_k$ at the output of the summation member (253) are subsequently fed, delayed in time and weighted additionally (relaxed), back to the input of the second shift register (252),
- new estimated values $\beta_k$ of the sought data sequence $a_k$ are produced in the equalising filter (25) during each iteration cycle, are issued each time at the output of the second shift register (252) and are subsequently stored in the second store (23) and in that case recorded over the data stored so far,
- the square of the magnitude is formed from the processed data $\delta\beta_k$ at the output of the summation member (253) in each iteration cycle, the individual squares of magnitude are summed up and the sum signals determines the relaxation factor ? for the processed data $\delta\beta_k$ fed back and beyond that serves as criterion for the termination of the iteration process,
- the estimated values $\beta_k$ of the sought data sequence $a_k$, which were filed last in the second store (23), are after termination of the iteration process issued at the output (8) of the equaliser (2) and the next portion of the output signal sequence $mfo_k$ of the matched filter (1) is subsequently stored in both the stores (22, 23).

2. Method according to claim 1, characterised thereby, that the weighting factors of the individual weighting members (2541 to 2547) of the weighting stage (254) correspond to the real component of the autocorrelation function of the pulse response of the transfer function of the entire transmission channel for the respective portion.

3. Method according to claim 2, characterised thereby, that the length of a portion is so chosen that the channel pulse response can be regarded as stationary by way of approximation during the portion.

4. Method according to one of the claims 1 to 3, characterised thereby, that the iteration process is terminated when the sum signal s falls below a certain first value.

5. Method according to one of the claims 1 to 3, characterised thereby, that the relaxation factor $\alpha$ for the processed data $\delta\beta_k$ fed back is increased (reduced) in the following iteration cycle when the difference between the sum signals s of both the preceding iteration cycles falls below (exceeds) a certain second value.

6. Method according to claim 5, characterised thereby, that the magnitude of the certain second value depends on the magnitude of the respective last sum signal s.

7. Method according to one of the claims 1 to 6, characterised thereby, that the estimated values $\beta_k$ of the sought data sequence $a_k$, which were read out from the second store (23) after the termination of the iteration process, are fed to a decision member (31).

8. Method according to one of the claims 1 to 6, characterised thereby, that the estimated values $\beta_k$ of the sought data sequence $a_k$, which were read out from the second store (23) after the termination of the iteration process, are fed to an error-correcting decoding circuit (32 or 33).

9. Method according to one of the claims 1 to 8, characterised thereby, that the data stored in the individual register places (2511 to 2514; 2521 to 2523) of both the shift registers (251; 252) are fed by way of decision members of an additional decision stage (256) to the weighting members (2541 to 2547) of the weighting stage (254).

10. Method according to claim 8, characterised thereby, that the data, which are stored in the last register place (2514) at the output of the first shift register (251), are fed directly to the associated weighting member (2544) and the data, which are stored in the remaining register places (2511 to 2513; 2521 to 2523) of both the shift registers (251, 252), are fed by way of the decision members (2561 to 2566) of the additional decision stage (256) to the associated weighted members (2541 to 2547) of the weighting stage (254).

11. Method according to one of the claims 9 or 10, characterised thereby, that a hard decision is taken each time in the decision members of the decision stage (256).

12. Method according to one of the claims 9 or 10, characterised thereby, that a soft decision is taken each time in the decision members of the decision stage (256) for data of the register places of both the shift registers (251, 252), which lie within a given range, and a hard decision is taken in other cases.

13. Method according to one of the claims 9 or 10, characterised thereby, that the mean value of the respectively adjacent hard decision value is allocated in the decision members of the decision stage (256) for data of the register places of both the shift registers (251, 252), which lie within a given range, and a hard decision is taken in other cases.

14. Arrangement for the equalising of dispersive, linear or approximately linear channels, in particular radio channels, for the transmission of digital signals by means of a matched filter (1), which is matchable to the entire transmission channel and which translates a received signal r(t) characterised by a data sequence $a_k$ into a time-discrete signal sequences $mfo_k$ at the output of the matched filter, and by means of an adjustable equaliser which equalises the time-discrete signal sequence $mfo_k$, characterised thereby, that

– the equaliser contains a first (22) and a second (23) store and an equalising filter (25) with a summation member (253) and a first (251) and a second (252) shift register,

– the first store (22) of the equaliser (2) is connectable by its input by way of a controllable on/off switch (20) with the input (7) of the equaliser (2) and by its output with the input of the summation member (253) of the equalising filter (25) of the equaliser (2),

– the second store (23) of the equaliser (2) is connectable by its input by way of a first controllable change-over switch (21) either with the input (7) of the equaliser (2) or with the output of the second shift register (252) of the equalising filter (25) of the equaliser (2) and by its output by way of a second controllable change-over switch (24) either with the input of the first shift register (251) of the equalising filter (25) or with the output (8) of the equaliser (2) and

– the output of the summation member (253) of the equalising filter (25) of the equaliser (2) is connected by way of a timing member (26) and a controllable weighting member (27) with an addition member (255), which is connected between both the shift registers (251, 252) of the equalising filter (25), and connected by way of a first circuit (28) for the formation of squares of magnitude and a second summation member (29), which is connected therebehind, with a sequence control (4, 5).

15. Arrangement according to claim 14, characterised thereby, that each of the individual register places (2511 to 2514; 2521 to 2523) of both the shift registers (251, 252) of the equalising filter (25) of the equaliser (2) is connected at the output each time with the input of the respectively associated weighting member (2541 to 2544; 2545 to 2547) of the weighting stage (254) of the equalising filter (25) and the outputs of the weighting members (2541 to 2547) are connected with the summation member (253).

16. Arrangement according to claim 15, characterised thereby, that the weighting members (2541 to 2547) of the weighting stage (254) of the equalising filter (25) of the equaliser (2) are controllable.

17. Arrangement according to one of the claims 14 to 16, characterised thereby, that each of the register places (2511 to 2514; 2521 to 2523) of both the shift registers (251, 252) of the equalising filter (25) of the equaliser (2) or each of the register places apart from the last register place (2514) lying at the output of the first shift register (251) is connected at the output each by way of a respective decision member (2561 to 2563; 2564 to 2566) of an additional decision stage (256) with the input of the respectively associated weighting member (2541 to 2543; 2545 to 2547) of the weighting stage (254).

18. Arrangement according to one of the claims 14 to 17, characterised thereby, that for data sequences $a_k$ of complex valency, the adaptive matched filter (1), the stores (22, 23), the shift registers (251, 252), the addition member (256) of the equalising filter (25) of the equaliser (2) as well as the weighting members (2541 to 2547) of the weighting stage (254) of the equalising filter (25) are constructed to be complex.

19. Equalising system according to one of the claims 1 to 18, characterised by the application for a cellular mobile radio system with dispersive multipath propagation.

20. Equalising system according to one of the claims 1 to 18, characterised by the application in a digital radio system.

## Revendications

1. Procédé d'égalisation ou correction de canaux dispersifs linéaires ou approximativement linéaires, notamment de canaux hertziens, pour transmettre des signaux numériques au moyen d'un filtre apparié adaptable à l'ensemble du canal de transmission (1), lequel filtre convertit un signal de réception r(t) caractérisé par une suite de données $a_k$ en une suite de signaux $mfo_k$ à valeurs discrètes dans le temps à la sortie du filtre apparié, et, au moyen d'un correcteur réglable, égalise ou corrige la séquence de réception $mfo_k$ à valeurs discrètes dans le temps, caractérisé

– par le fait que la séquence de signaux mfo$_k$ est subdivisée en portions qui se recoupent mutuellement, et les portions sont mémorisées individuellement dans une première et une deuxième mémoire (22, 23) du correcteur (2);

– par le fait que la suite de signaux mfo$_k$ mémorisée à chaque fois est ensuite corrigée dans un filtre de correction (25) du correcteur (2), les données mémorisées dans la deuxième mémoire (23) étant transmises à l'entrée d'un premier registre à décalage (251) branché en série avec un deuxième registre à décalage (252), les données mémorisées dans les emplacements individuels (2511 - 2514; 2521 - 2523) des deux registres à décalage (251; 252) étant, lors de chaque période d'un cycle d'itération, amenées, via des éléments de pondération (2541 - 2547) d'un étage de pondération (254), à un élément de sommation (253) et y étant totalisées, et les données à la sortie de l'élément de sommation (253), totalisées δß$_k$ et, en outre, retardées et pondérées (relaxées) étant rétrocouplées à l'entrée du deuxième registre à décalage (252);

– par le fait que, dans le filtre de correction (25), pendant chaque cycle d'itération, de nouvelles valeurs estimées ß$_k$ de la suite de données recherchée (a$_k$) sont produites, ces valeurs étant à chaque fois émises à la sortie du deuxième registre à décalage (252) et étant ensuite mémorisées dans la deuxième mémoire (23) et, ce faisant, écrasant les données mémorisées antérieurement;

– par le fait que, dans chaque cycle d'itération, on forme le carré de la valeur absolue des données traitées δß$_k$ apparaissant à la sortie de l'élément de sommation (253), et les carrés individuels sont additionnés et le signal de somme s détermine le facteur de relaxation $\alpha$ pour les données traitées δß$_k$ et sert en outre de critère pour l'interruption du processus d'itération;

– par le fait qu'après l'interruption du processus d'itération, les valeurs estimées ß$_k$ de la suite de valeurs recherchée a$_k$ déposées en dernier dans la deuxième mémoire (23) sont émises à la sortie (8) du correcteur (2) et la portion suivante de la suite de signaux de sortie mfo$_k$ du filtre apparié (1) est ensuite mémorisée dans les deux mémoires (22, 23).

2. Procédé selon revendication 1, caractérisé par le fait que les facteurs de pondération des éléments de pondération individuels (2541 - 2547) de l'étage de pondération (254) correspondent, pour la portion concernée, à la partie réelle de la fonction d'autocorrélation de la réponse impulsionnelle de la fonction de transfert de l'ensemble du canal de transmission.

3. Procédé selon revendication 2, caractérisé par le fait que la longueur d'une portion est choisie de manière que la réponse impulsionnelle du canal puisse être considérée comme approximativement stationnaire au cours de ladite portion.

4. Procédé selon l'une des revendications 1 à 3, caractérisé par le fait que le processus d'itération est interrompu si le signal de somme s passe en dessous d'une première valeur déterminée.

5. Procédé selon l'une des revendications 1 à 3, caractérisé par le fait que le facteur de relaxation $\alpha$ pour les données traitées rétrocouplées δβ$_k$ est augmenté (diminué) dans le cycle d'itération suivant si la différence des signaux de somme s des deux cycles d'itération précédents est inférieure (est supérieure) à une deuxième valeur déterminée.

6. Procédé selon revendication 5, caractérisé par le fait que la grandeur de la deuxième valeur déterminée dépend à chaque fois de la grandeur du dernier signal somme s.

7. Procédé selon l'une des revendications 1 à 6, caractérisé par le fait que les valeurs estimées ß$_k$ de la suite de données a$_k$ recherchée, collectées à partir de la deuxième mémoire (23) après l'interruption du processus d'itération, sont transmises à un élément de décision (31).

8. Procédé selon l'une des revendications 1 à 6, caractérisé par le fait que les valeurs estimées ß$_k$ de la suite de données a$_k$ recherchée, collectées à partir de la deuxième mémoire (23) après l'interruption du processus d'itération, sont transmises à un circuit décodeur correcteur d'erreur (32 ou 33).

9. Procédé selon l'une des revendications 1 à 8, caractérisé par le fait que les données mémorisées dans les emplacements individuels (2511 - 2514; 2521 - 2523) des deux registres à décalage (251, 252) sont transmises, via des éléments de décision d'un étage de décision supplémentaire (256), aux éléments de décision (2541 - 2547) de l'étage de pondération (254).

10. Procédé selon revendication 8, caractérisé par le fait que les données mémorisées dans le dernier emplacement de registre (2514), à la sortie du premier registre à décalage (251), sont directement transmises à l'élément de pondération y relatif (2544), et les données mémorisées dans les emplacements de registre restants (2511 - 2513; 2521 - 2523) des deux registres à décalage (251, 252) sont transmises, via les éléments de décision (2561 - 2566) de l'étage de décision supplémentaire (256), aux éléments de décision y relatifs (2541 - 2543; 2545 - 2547) de l'étage de pondération (254).

11. Procédé selon l'une des revendications 9 ou 10, caractérisé par le fait qu'une décision ferme est prise à chaque fois dans les éléments de décision de l'étage de décision (256).

12. Procédé selon l'une des revendications 9 ou 10, caractérisé par le fait que, dans les éléments de décision de l'étage de décision (256), une décision soft est prise pour les données des emplacements de registre des deux registres à décalage (251, 252) qui sont situées à l'intérieur d'un domaine prédéterminé, et une décision ferme est prise dans les autres cas.

13. Procédé selon l'une des revendications 9 ou 10, caractérisé par le fait que, dans les éléments de décision de l'étage de décision (256), la valeur moyenne des valeurs de décision ferme voisines est adoptée pour les données des emplacements de registre des deux registres à décalage (251, 252) qui sont situées à l'intérieur d'un domaine prédéterminé, et une décision ferme est prise dans les autres cas.

14. Agencement de correction ou égalisation de canaux linéaires ou approximativement linéaires, notamment de canaux hertziens, pour transmettre des signaux numériques au moyen d'un filtre apparié (1) qui est adaptable à l'ensemble du canal de transmission, convertit un signal de réception r(t) caractérisé par une séquence de données $a_k$ en une séquence de signaux $mfo_k$ à valeurs discrètes dans le temps à la sortie du filtre apparié, et qui, au moyen d'un correcteur réglable, corrige la séquence de réception $mfo_k$ à valeurs discrètes dans le temps, caractérisé

    – par le fait que le correcteur comporte une première (22) et une deuxième mémoire (23) et un filtre correcteur (25) avec un élément de sommation (253) et un premier (251) et un deuxième registre à décalage (252);

    – par le fait que la première mémoire (22) du correcteur (2) peut être reliée par son entrée, via un interrupteur (20) pouvant être commandé, à l'entrée (7) du correcteur (2) et est reliée, par sa sortie, à l'entrée de l'élément de sommation (253) du filtre de correction (25) du correcteur (2);

    – par le fait que la deuxième mémoire (23) du correcteur (2) peut être reliée, par son entrée, via un premier commutateur pouvant être commandé (21), soit à l'entrée (7) du correcteur (2) soit à la sortie du deuxième registre à décalage (252) du filtre de correction (25) du correcteur (2), et peut être reliée, par sa sortie, via un deuxième interrupteur pouvant être commandé (24), soit à l'entrée du premier registre à décalage (251) du filtre de correction (25) soit à la sortie (4) du correcteur (2);

    – par le fait que la sortie de l'élément de sommation (253) du filtre de correction (25) du correcteur (2) est reliée, via un élément temporisé (26) et un élément de pondération pouvant être commandé (27), à un élément d'addition (255) monté entre les deux registres à décalage (251, 252) du filtre de correction (25), et est reliée, via un premier circuit (28) pour la formation du carré de la valeur absolue et via un deuxième élément de sommation suivant (29), à une commande d'exécution (4, 5).

15. Agencement selon revendication 14, caractérisé par le fait que chacun des emplacements individuels (2511 - 2514; 2521 - 2513) des deux registres à décalage (251, 252) du filtre de correction (25) du correcteur (2) est relié à chaque fois côté sortie à l'entrée de l'élément de pondération (2541 - 2544; 2545 - 2547) qui lui est affecté au sein de l'étage de pondération (254) du filtre de correction (25), et les sorties des éléments de pondération (2541 - 2547) sont reliées à l'élément de sommation (253).

16. Agencement selon revendication 15, caractérisé par le fait que les éléments de pondération (2541 - 2547) de l'étage de pondération (254) du filtre de correction (25) du correcteur (2) sont aptes à être commandés.

17. Agencement selon l'une des revendications 14 à 16, caractérisé par le fait que chacun des emplacements de registre (2511 - 2514; 2521 - 2523) des deux registres à décalage (251; 252) du filtre de correction (25) du correcteur (2), ou chacun des emplacements de registre, à l'exception du dernier emplacement (2514) situé à la sortie du premier registre à décalage (251), est relié côté sortie, à chaque fois par l'intermédiaire d'un élément de décision (2561 - 2563; 2564 - 2566) d'un étage de décision supplémentaire (256), à l'entrée de l'élément de pondération y relatif (2541 - 2543; 2545 - 2547) de l'étage de pondération (254).

18. Agencement selon l'une des revendications 14 à 17, caractérisé par le fait que, dans le cas de suites de données à valeur complexe $a_k$, le filtre adaptatif apparié (1), les mémoires (22, 23), les registres à décalage (251, 252), l'élément d'addition (256) du filtre de correction (25) du correcteur (2), ainsi que les éléments de pondération (2541 - 2547) de l'étage de pondération (254) du filtre de correction (25), sont conçus-réalisés pour être complexes.

19. Système de correction selon l'une des revendications 1 à 18, caractérisé par l'utilisation pour un système hertzien cellulaire mobile avec propagation dispersive à plusieurs voies.

20. Système de correction selon l'une des revendications 1 à 18, caractérisé par l'utilisation dans un système de radiodiffusion numérique (DAB).

FIG. 1

FIG. 2

FIG. 3

EP 0 349 603 B1

FIG. 4

FIG. 5

FIG. 6